(19) Europäisches Patentamt
European Patent Office
Office européen des brevets

(11) **EP 4 258 170 A1**

(12) **EUROPEAN PATENT APPLICATION**

(43) Date of publication:
**11.10.2023 Bulletin 2023/41**

(21) Application number: **22167203.3**

(22) Date of filing: **07.04.2022**

(51) International Patent Classification (IPC):
***G06N 3/04*** *(2023.01)*

(52) Cooperative Patent Classification (CPC):
**G06N 3/04**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Aptiv Technologies Limited
St. Michael (BB)**

(72) Inventor: **Kreinberg, Sören
42119 Wuppertal (DE)**

(74) Representative: **Manitz Finsterwald
Patent- und Rechtsanwaltspartnerschaft mbB
Martin-Greif-Strasse 1
80336 München (DE)**

(54) **METHODS AND SYSTEMS FOR EVALUATING QUANTIZABILITY OF A COMPUTATION GRAPH**

(57) A computer implemented method for evaluating a performance metric of a computational graph comprises: acquiring an input data set associated with the computational graph comprising a plurality of nodes, and a quantization scheme defined by at least one quantization parameter; processing the input data set by feeding it into the computational graph; extracting data output of at least a non-empty subset of the plurality of nodes of the computational graph; evaluating the performance metric of the computational graph by performing for each of the nodes in the subset and for each of the at least one quantization parameter the steps of: varying a value of the respective quantization parameter; quantizing the respective node based on the value of the respective quantization parameter; and evaluating the computational graph based on the quantized respective node.

400

Acquire an input data set associated with the computational graph and the performance metric — 402

Process the input data set by feeding it into the computational graph comprising a plurality of nodes — 404

Extract data output of at least a non-empty subset comprising at least one of the plurality of nodes of the computational graph — 406

Evaluate the performance metric of the computational graph — 408

Fig. 4

**Description**

FIELD

The present disclosure relates to methods and systems for evaluating how the accuracy of a computation graph output depends on the quantization bit width and for evaluating which quantization parameter values yield close to optimum accuracy of computation graph outputs.

BACKGROUND

Computation graphs are a popular way of representing numerical methods and are the de-facto standard for representing deep neural networks. Computation graphs are directed graphs, where the edges correspond to the flow of data and nodes correspond to computation. The computations may consume the data from the inbound edges and may produce the data on the outbound edges. Especially in many deep neural network frameworks, the data transferred by the edges is stored in tensor data structures and thus, the data that is transferred by the edges may be called "tensors". Often, computation graphs are designed, tuned and tested on high performance computing systems or at least GPUs (graphics processing units), but are meant to be deployed on hardware with only limited resources, for example smartphones or embedded systems. In these cases, it may be crucial for deployability to reduce memory consumption, memory traffic, and computation cycles. One very important method to achieve this is called "quantization". Quantization may refer to reducing the required bit width per number by avoiding quasi-continuous encodings such as the ubiquitous IEEE 754 float32 and to instead encode the number in discrete and low bit width data types, for example int8 or int16. This may reduce memory consumption and may also reduce memory traffic. Because many processors achieve higher throughput for shorter bit-width data types, quantization may also reduce computation cycles.

Quantization may help reducing hardware resource consumption but may come at the cost of quantization error and potentially degraded computation results. This may bring the following problems: it may be desired to limit high-precision deployment to those parts of the graph, which really need it; it may be desired to reduce the number and size of parts with high-precision demand; and it may be desired to find quantization parameter values for deployment.

Accordingly, there may be a need to provide methods for evaluating the effect of quantization on the computation graph outputs in dependence of quantization parameters.

While quantization helps reducing hardware resource consumption, it comes at the cost of quantization error and potentially degraded computation results. This may bring several problems.

For reducing hardware resource consumption and thus costs, the number and size of computation graph parts requiring high precision should be reduced. Hence, efforts in computation graph design and improvement need to be targeted on those parts, which have high precision demands. The problem is that information on which those critical parts are and why those parts are critical is rarely trivially accessible from graph, original input data, original intermediate data, or original output data.

This problem has not been addressed explicitly, yet. There is work on determining or estimating precision demands of parts of the computation graph, but with the focus on deployment, not on graph revision [Uhlich]. However, this method does not explicitly aim for giving a good estimate of per-tensor precision demands, but rather focuses on optimizing the graph with respect to some metric globally. Consequently, these methods do not and cannot provide any further insights on why each part of the graph has the found precision demand. Another drawback is that the metric should be well-suited for gradient descent optimization, which can prevent the direct usage of certain key performance indicators (KPIs) as a metric. Another important drawback is that this method relies on setting up a new or modifying an existing framework for gradient descent optimization of computation graphs ("training framework" in a neural network context) or even to modify the computation graph itself.

A further problem arises because hardware resource consumption must be reduced to reduce cost. Thus, only those parts of the computation graph should be deployed with high precision to the target hardware, which have high precision demands when it comes to ensuring computation error is within limits. The problem is that information on which those critical parts are is usually not trivially accessible from the graph, original input data, original intermediate data, or original output data.

[Uhlich, Wang, Elthakeb] suggest solutions to this problem. As mentioned above, [Uhlich] has the drawback of being restricted to certain classes of metrics and the dependency on customizing a gradient descent optimization framework or even graph modifications. The approaches suggested by [Wang, Elthakeb] suffer from the drawback described by [Uhlich], namely high computational complexity. Another obvious approach is trial and error which is however very costly and tedious.

Furthermore, for applying quantization, values of quantization parameters need to be determined. This usually involves a tradeoff between several degrading effects. For example, in the case of symmetric equidistant quantization and a given bit width, the trade-off is between discretization error and clipping error. Determining, or at least estimating, which quantization parameter value tuple yields the lowest degradation of computation results is usually not trivially possible given only the graph, original input data, original intermediate data, and original output data.

[Uhlich] suggests determining suitable quantization parameter values via gradient descent optimization with respect to a certain metric and lists several other publications that suggest similar approaches [Jain, Esser]. This again has the drawback of being restricted to certain classes of metrics and the dependency on customizing a gradient descent optimization framework or even graph modifications. A potential pitfall opens when applying optimization algorithms not only on the values of quantization parameters, but also on the values of other numeric constants in the graph: The computation graph might become reliant on the non-linearities of quantization. This is especially true in the context of deep learning. Therefore, if the target hardware is not designed to support the quantization parametrization used during optimization, the accuracy of the deployed model might either be less than expected, or extra computational overhead is required to emulate the quantization parametrization for which the graph was optimized.

Further suggestions to address the problem of finding quantization parameter values for deployment were published by [Wang, Elthakeb]. However, [Uhlich] states that their suggestions have high computational complexity. Another approach is statistical analysis of the data which is to be quantized. This is commonly used and has low computational cost. It lacks however semantic information (for example indicating whether an outlier is irrelevant or especially interesting), strongly depends on the selected statistical criterion and cannot be targeted to optimize arbitrary KPIs of the whole computation graph. Another approach (c.f. [Banner]) related to statistical analysis is to minimize a quantization error metric on a per-tensor basis. This approach also has low computational cost, but it strongly depends on the selected quantization error metric and cannot be targeted to optimize arbitrary KPIs of the whole computation graph.

[Uhlich] Stefan Uhlich, Lukas Mauch, Fabien Cardinaux, Kazuki Yoshiyama, Javier Alonso Garcia, Stephen Tiedemann, Thomas Kemp, Akira Nakamura. Mixed Precision DNNs: All you need is a good parametrization. arXiv:1905.11452, 2019.

[Elthakeb] Ahmed T. Elthakeb, Prannoy Pilligundla, Amir Yazdanbakhsh, Sean Kinzer, and Hadi Esmaeilzadeh. Releq: A reinforcement learning approach for deep quantization of neural networks. arXiv:1811.01704, 2018.

[Esser] Steven K. Esser, Jeffrey L. McKinstry, Deepika Bablani, Rathinakumar Appuswamy, and Dharmendra S. Modha. Learned step size quantization. arXiv:1902.08153, 2019.

[Wang] Kuan Wang, Zhijian Liu, Yujun Lin, Ji Lin, and Song Han. HAQ: hardware-aware automated quantization. arXiv:1811.08886, 2018.

[Jain] Sambhav R. Jain, Albert Gural, Michael Wu, and Chris Dick. Trained uniform quantization for accurate and efficient neural network inference on fixed-point hardware. arXiv:1903.08066, 2019.

[Banner] Ron Banner, Yury Nahshan, Elan Hoffer, and Daniel Soudry. ACIQ: Analytical Clipping for Integer Quantization of neural networks. ICRL 2019.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for evaluating a performance metric of a computation graph, the method comprising: acquiring an input data set associated with the computational graph comprising a plurality of nodes, and a quantization scheme defined by at least one quantization parameter; processing the input data set by feeding it into the computational graph; extracting data output of at least a non-empty subset of the plurality of nodes of the computational graph; evaluating the performance metric of the computational graph by performing for each of the nodes in the subset and for each of the at least one quantization parameter the steps of: varying a value of the respective quantization parameter; quantizing the respective node based on the value of the respective quantization parameter; and evaluating the computational graph based on the quantized respective node.

According to various embodiments, evaluating the performance metric further comprises dequantizing the quantized respective node. The computational graph may be evaluated further based on the dequantized node.

According to various embodiments, the performance metric is based on: a) a user-provided reference; or evaluation of the computational graph using the input data set; and b) evaluation of the computational graph based on the quantization of the respective node. It will be understood that "acquiring" may refer to obtaining from a user as an input, or reading from a file, such as reading a configuration from a file.

Quantizability may refer to how a computation graph behaves when at least partially quantized, for example how an error behaves, and/or which portions of the computation graph may be better suited for quantization.

The performance metric may also be referred to as KPI (key performance indicator). Using a performance metric which may be user-defined may allow an analysis of the quantizability which is tailored to the specific application.

The modified computation graph may also be referred to as quantization-degraded computation graph.

The method may provide estimates of precision demands with per-tensor granularity.

According to an embodiment, the performance metric compares: a part of the evaluation of the computational graph based on the quantization of the respective node to the evaluation of the computational graph using the input data set; and the rest of evaluation of the computational graph based on the quantization of the respective node to the user-provided reference. The user-provided reference may for example comprise pre-determined labels corresponding to the input data set.

According to an embodiment, the at least one quantization parameter is user defined; and/ or the subset is user defined; and/ or the performance metric is user defined.

According to an embodiment, the metric comprises an Euclidean metric or a Manhattan metric between a number of detections in an output of the computational graph to which the quantization is applied and an output of the computational graph to which the quantization is not applied. For example, the metric may come from system requirements or the metric may anticipate/approximate how system requirements might look. In an autonomous driving scenario, the metric may for example be "number of misclassified vulnerable road users (VRUs) in the input data set". The metric does not need to fulfill any smoothness criteria, since a derivation of the metric is not required.

According to an embodiment, the quantization scheme comprises a symmetrical quantization scheme or an asymmetrical quantization scheme. A symmetrical quantization scheme may be defined by less parameters compared to an asymmetrical quantization scheme. An asymmetrical quantization scheme may provide more flexibility compared to a symmetrical quantization scheme.

According to an embodiment, the quantization scheme indicates at least one clipping limit, for example one clipping limit for a symmetrical quantization scheme and two clipping limits for an asymmetrical quantization scheme, and a quantization step size.

According to an embodiment, the method further comprises: for each node of the subset, determining quantization parameter value thresholds that separates quantization parameter values which result in acceptable performance metric values from those quantization parameter values which result in not acceptable performance metric values. The quantization parameter value thresholds may provide parameters which define a quantization scheme which is as efficient as possible in terms of quantization while fulfilling KPI requirements in terms of acceptable performance metric values.

According to an embodiment, the quantization parameter value thresholds comprise respective thresholds for at least one clipping limit and a quantization step size.

According to an embodiment, the method further comprises: for each node of the subset, determining a set of quantization parameter values that result in close-to-optimum or optimum performance metric values for a given quantization bit width.

According to an embodiment, the set of quantization parameter values comprises at least one clipping limit and a quantization step size.

According to an embodiment, the method may further comprise: determining for each node of the subset a number of quantization bits. The number of quantization bits may be the number of quantization bits required for achieving the desired KPI performance, which may for example be defined in terms of acceptable performance metric value ranges. The lower the number of required quantization bits, the better the computation graph may be quantized at the respective tensor; in other words: the higher the quantizability of the computation graph at the respective tensor.

According to an embodiment, the number of quantization bits is determined based on the quantization parameter thresholds.

According to an embodiment, the method further comprises quantizing the computational graph based on the performance metric.

According to an embodiment, the method further comprises deploying the quantized computational graph on a resource-constrained embedded system.

According to an embodiments, the embedded system is a mobile computing device, a mobile phone, a tablet computing device, or a vehicle.

In another aspect, the present disclosure is directed at a computer implemented method for evaluating deployability of a computational graph. The method for evaluating deployability of a computational graph comprises evaluating a performance metric of the computational graph based on the method for evaluating a performance metric of a computation graph as described herein, wherein the deployability is evaluated based on the performance metric

According to an embodiment, quantizing the computation graph based on the evaluation comprises: for each of the nodes of the subset, setting quantization parameters based on the quantization parameter value thresholds.

According to an embodiment, the method further comprises deploying the quantized computation graph. Once the computation graph has been quantized, it may be deployed, and may be executed efficiently.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

Various embodiments may provide a KPI (key performance indicator) driven approach for analyzing quantizability of computation graphs.

Various embodiments may provide a technique for analysing the suitability of utilising quantization in computational graphs for representing neural network and associated methods.

Various embodiments may provide information on the required bit width with per-tensor granularity.

Various embodiments do not rely on gradient descent and as such do not require a framework for gradient descent optimization of computation graph parameters. Consequently, KPIs for judging the quantization outcome may be freely chosen and do not need to be a metric suitable for gradient descent optimization.

Various embodiments do not only recommend quantization parameter value tuples for optimizing a given metric, but various embodiments may sample many quantization parameter value tuples. This may give deeper insight into why a specific quantization parameter value tuple is recommended and may aid computation graph designers.

Various embodiments do not only locally analyze the quantization impact on the data to be quantized, but various embodiments may analyze the outcome of the whole computation graph and may judge this outcome based on user-provided domain-specific KPIs.

DRAWINGS

Exemplary embodiments and functions of the present disclosure are described herein in conjunction with the following drawings, showing schematically:

Fig. 1                   an illustration of the quantizability analysis system according to various embodiments;

Fig. 2                   an illustration of the internals of the quantizability analysis system according to various embodiments;

Fig. 3A and Fig. 3B      exemplary visualizations of outputs for a single tensor of an object detection deep neural network according to various embodiments;

Fig. 4                   a flow diagram illustrating a method for evaluating a performance metric of a computational graph according to various embodiments;

Fig. 5                   a performance metric evaluation system according to various embodiments; and

Fig. 6                   a computer system with a plurality of computer hardware components configured to carry out steps of a computer implemented method for evaluating a performance metric of a computational graph according to various embodiments.

DETAILED DESCRIPTION

Computation graphs, which may also be referred to as computational graphs, may represent a numerical method and may be a de-facto standard for representing deep neural networks. Computation graphs are directed graphs, where the edges correspond to the flow of data and nodes correspond to computation. The computations may consume the data from the inbound edges and produce the data on the outbound edges. Especially in many deep neural network frameworks, the data transferred by the edges is stored in tensor data structures and thus called "tensors".

As used herein, the terms "computation graph edge" and "tensor" may be used synonymously.

Computational graphs may also be referred to as computational network, or as graph, or as network, or as net.

Computation graphs may be designed, tuned and tested on high performance computing systems or at least GPUs (graphics processing units), but may be meant to be deployed on hardware with only limited resources, for example smartphones or embedded systems.

"Deploying" may refer to embodying the computational graph in a system for application (in contrast to embodying the computational graph for analysis purposes or training purposes).

It may be important for deployability to reduce memory consumption, memory traffic, and computation cycles. One method to achieve this is called "Quantization".

Quantization may mean to reduce the required bit width per number by avoiding quasi-continuous encodings such as the ubiquitous IEEE 754 float32 and to instead encode the number in discrete and low bit width data types, for example int8 or int16. Quantization may reduce memory consumption and may also reduce memory traffic. Because many processors achieve higher throughput for shorter bit-width data types, quantization may also reduce computation cycles.

Quantization may reduce hardware resource consumption but may come at the cost of quantization error and potentially degraded computation results.

This brings the following problems:

***Problem P1: Limit high-precision deployment to those parts of the graph, which really need it.***

It may be desired to reduce hardware resource consumption to reduce cost. Thus, only those parts of the computation graph may be deployed with high precision to the target hardware, which have high precision demands when it comes to ensuring computation error is within limits. However, information on which those critical parts are is usually not trivially accessible from the graph, original input data, original intermediate data, or original output data.

***Problem P2: Reduce the number and size of parts with high-precision demand.***

For reducing hardware resource consumption and thus costs, the number and size of computation graph parts requiring high precision may be reduced. Hence, efforts in computation graph design and improvement may be targeted on those parts which have high precision demands. However, information on which parts are those critical parts and why those parts are critical is not easily accessible from graph, original input data, original intermediate data, or original output data.

***Problem P3: Find quantization parameter values for deployment.***

For applying quantization, values of quantization parameters may be determined. This may involve a tradeoff between several degrading effects. For example, in the case of symmetric uniform quantization and a given bit width, the trade-off is between discretization error and clipping error. However, determining, or at least estimating, which quantization parameter value tuple yields the lowest degradation of computation results is not easily possible given only the graph, original input data, original intermediate data, and original output data.

Various embodiments may address the above problems.

According to various embodiments, problems P1 and P2 may be solved for each tensor of interest by determining acceptable limits for each quantization parameter and then calculating or estimating the quantization scheme-specific (fractional) bit width that is required for the limit case quantization parameter value tuple. The acceptable limits for each quantization parameter may be determined by applying the KPI thresholds on the respective KPI vs. quantization parameter value relations found during the solution of P3.

According to various embodiments, problem P3 may be solved by analyzing the effect of each quantization parameter (on a per-tensor basis) on the computation graph output. According to various embodiments, this may be done by varying each quantization parameter's value individually and on a per-tensor basis, computing the graph output and scoring the graph output via domain-specific KPIs. To ensure that individual quantization parameter analysis is meaningful, the quantization scheme parametrization may be chosen such that the quantization parameters are effectively independent from each other; in other words: such that the quantization parameters are decoupled. For further steps, the sampled KPI vs. quantization parameter value relations may be generalized by applying for example interpolation or regression schemes. The quantization parameter values for deployment may then be obtained by finding a quantization parameter value tuple such that no individual quantization parameter crosses the KPI threshold, while complying to restrictions imposed on the quantization scheme by the target hardware and the maximum desired bit width. If no KPI threshold is provided for one or more KPI, or if a threshold must be crossed to provide a solution, the quantization parameter values may be chosen such that the respective KPI is optimized, while complying to restrictions imposed on the quantization scheme by the target hardware and the maximum desired bit width.

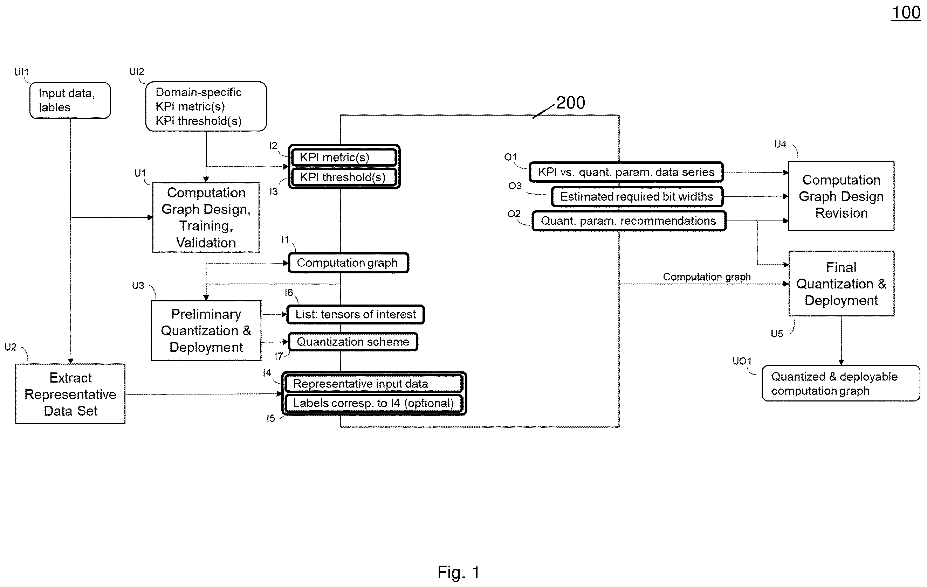

Fig. 1 shows an illustration 100 of the quantizability analysis system 200 according to various embodiments as part of an exemplary computation graph design and deployment pipeline. In the exemplary example of Fig. 1, a machine learning example is illustrated. The interface between the quantizability analysis system 200 according to various embodiments and the user's process (blocks U1, U2, U3, U4, U5, UI1, UI2, UO1) are illustrated by blocks I1, I2, I3, I4, I5, I6, I7, O1, O2, O3.

Inputs to the quantizability analysis system 200 may include:

- I1: A definition of the computation graph.
- I2: A definition of KPI metrics.
- I3: A threshold for each KPI I2 to decide whether a given KPI value is acceptable or not.
- I4: An input data set which is representative with respect to the KPIs I2.
- I5: Optionally, if required for any KPI metric I2: a dataset of pursued computation graph I1 output information corresponding to given input data set I4. This may be relevant in cases where the computation graph serves the purpose of approximating a (not necessarily explicitly known) function, which may be the case for supervised machine learning. In a supervised machine learning context, this dataset of pursued output values may be referred to as "labels".
- I6: The "tensors of interest", which may be a list of computation graph edges to be analyzed.
- I7: Specification of the quantization scheme to analyze. The parametrization of the quantization scheme may be chosen such that the (anti-) correlation between quantization parameters is minimum, for example ideally zero. An example for a quantization scheme parametrization will be given further below.

Outputs from the quantizability analysis system 200 may include:

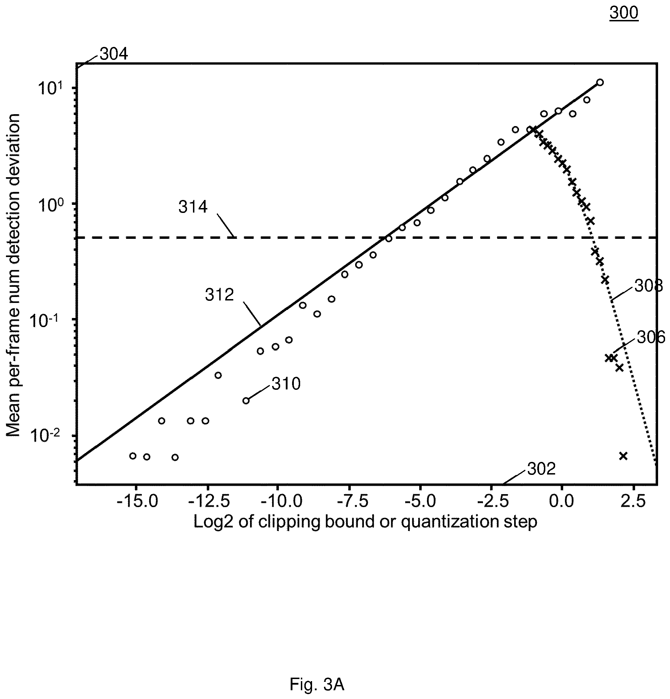

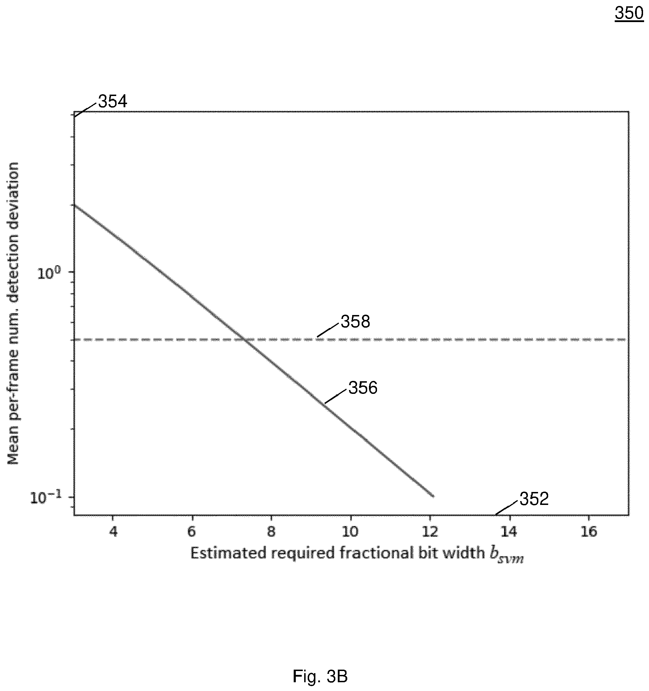

- O1: A data series for each quantization parameter I7, for each tensor of interest I6 and for each KPI metric I2. O1 may be a KPI metric value vs. quantization parameter value, for example as illustrated in Fig. 3A and Fig. 3B.
- O2: For each tensor of interest I6 and each quantization parameter of the quantization scheme I7: A quantization parameter value threshold that separates quantization parameter values which result in acceptable KPI values I3 from those quantization parameter values which result in not acceptable KPI values. These quantization parameter value thresholds can be interpreted as quantization parameter recommendations.
- O3: Estimated required quantization bits for each tensor. O3 may be derived from the quantization parameter thresholds.

As illustrated in Fig. 1, the user's flow may start with labeled input data UI1 and a notion of how to judge the computation graph results UI2, formalized as KPIs I2 and thresholds for these KPIs I3. The inputs UI1 and UI2 may be used for the computation graph design process U1, where they play an important role for training and validation. After U1 resulted in a computation graph I1, the user utilizes a deployment framework U3 to adjust the computation graph to hardware peculiarities, which may change the nodes and edges of the graph. By comparing the hardware-adjusted graph with the original graph, the user may obtain a list of tensors of interest I6. The user may also select a quantization scheme I7, for example as described in more detail below, from those supported by the deployment framework and target hardware. The user may extract U2 a representative data set I4 from the input data, and may label I5 corresponding to the representative input data I4. For example, the user may decide to extract especially those frames which are most challenging in the sense that they have the worst impact on the KPI; this may reduce the risk that the quantized network performs worse when applied on the left-out data than when applied on the representative data set I4.

The user may then employ the quantizability analysis system 200 which may produce data series of KPI vs. quantization parameter value dependencies O1, estimates of the required bit width per graph edge O3, and recommendations for quantization parameter values O2. The user may then utilize O1, O2, and O3, for computation graph revision U4 during which the user may decide to go back to U1, adjust the graph and proceed from there. Eventually, the user may feed the recommended quantization parameter values O2 in combination with the computation graph I1 into the deployment framework U5 to obtain a deployable, quantized computation graph UO1.

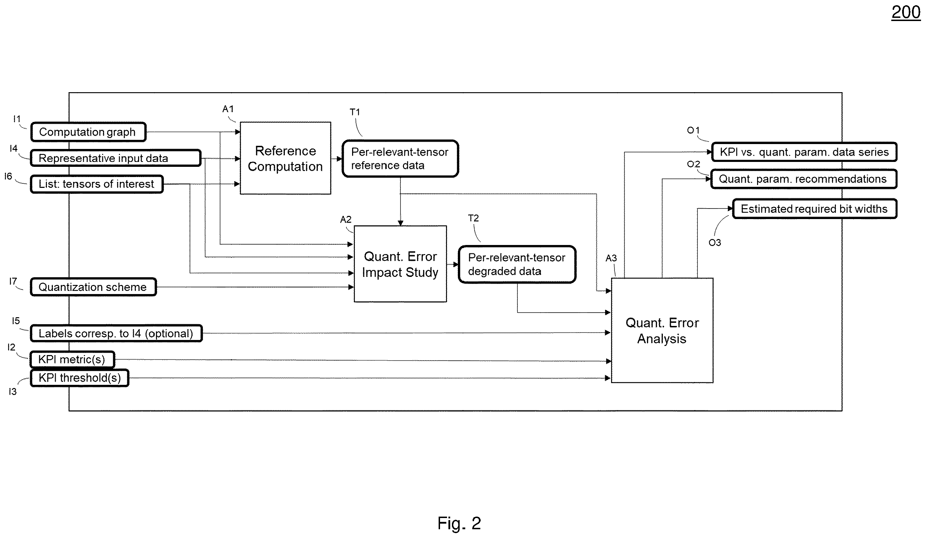

Fig. 2 shows an Illustration of the internals of the quantizability analysis system 200 according to various embodiments, displaying the inputs I1 to I7, the internal blocks A1 to A3, internal intermediate results T1 and T2, and the outputs O1 to O3.

Reference computation A1 may evaluate the outputs and all tensors of interest I6 of the computation graph I1 for given input data I4, yielding T1. During the quantization error impact study A2, tensors from T1 may be selectively quantized according to the specified quantization scheme I7 and injected into the computation graph I1, overriding the input data I4 or intermediate results T1 obtained from processing I4. The modified computation graph may be evaluated yielding quantization error affected graph outputs T2. During quantization error analysis A3, the quantization error affected graph outputs T2 may be analyzed with respect to KPI metrics I2, KPI thresholds I3, and, if applicable, labels I5 or reference results T1. This may yield data series on KPI vs. quantization parameter value dependencies O1 (as illustrated in Fig. 3A and Fig. 3B below), recommendations for quantization parameter values O2, and estimates of the required quantization bit widths O3.

Fig. 3A and Fig. 3B show exemplary visualizations of O1 and the derivation of O2 and O3 for a single tensor of an object detection deep neural network according to various embodiments.

Fig. 3A shows an illustration 300 of the frame-averaged KPI (on vertical axis 304) vs. quantization parameter value data series O1 (on horizontal axis 302) for the parameters d (which may denote the discretization step size, and is illustrated by circles 310) and $q_{max}$ (which may denote the clipping limit, and is illustrated by crosses 306) of a symmetric uniform quantization scheme. Lines 312 and 308 depict fits to the respective data series. It will be understood that "frame-averaged" may refer to an average over the various frames, which also may be referred to as data sets, of the reference dataset I4.

Fig. 3B shows an illustration 350 of a curve 356 of the estimated KPI (on vertical axis 354) vs. bit width dependency (on horizontal axis 352) derived from the fits as illustrated in Fig. 3A.

Both Fig. 3A and Fig. 3B contain an exemplary KPI threshold (illustrated by dashed line 314, 358) of 0.5. The quantization parameter recommendations O2 may correspond to the x-position where the respective fit crosses the KPI threshold 314 in Fig. 3A. The estimated bit width O3 corresponds to the x-position where the KPI line 356 crosses the KPI threshold 358 in Fig. 3B.

Reference computation A1 may include the following processing: Using the computation graph I1 and the reference dataset I4, the output values from the computation graph and the values of each tensor of interest I6 may be determined for each input data frame, yielding intermediate data T1.

Quantization error impact study A2 may include the following processing: For each data frame (from I4), for each tensor of interest (from I6), for each quantization parameter and for a range of relevant quantization parameter values, the quantization parameter-specific (from I7) quantization error may be applied on the tensor of interest values T1. The error may be applied on the tensor by quantization according to scheme of I7 and subsequent dequantization. The resulting pseudo-quantized tensor of interest may then be injected into the original computation graph I1. The now manipulated computation graph may then be applied on the input data frame I4 to obtain the output tensors of the graph. According to various embodiments, always only one single pseudo-quantized tensor may be injected into the original computation graph.

As a result, tensor of interested-specific, data frame-specific, quantization parameter-specific, and quantization parameter value-specific quantization-degraded computation graph output tensors T2 may be provided.

Quantization error analysis A3 may include the following processing: To analyze the impact of quantization error, the KPI metric definitions I2 may be applied on the quantization-affected output values from the computation graph, while - if demanded by the respective KPI metric definition - considering optional labels for the input I5 and/or the reference output values from the computation graph T1.

As a result, tensor of interested-specific, quantization parameter-specific, quantization parameter value-specific, and - if permitted by the KPI definition and desired by the user - data frame-specific KPI values O1 may be provided.

After applying a suitable regression or interpolation technique to O1 (as illustrated in Fig. 3A and Fig. 3B), the quantization parameter value recommendations O2 may be determined by applying the KPI thresholds I3. The quantization scheme-specific bit width estimates O3 may be calculated from O2.

In the following, a quantization scheme parametrization according to various embodiments will be described.

A quantization scheme may be defined to be a concept of how real numbers can be mapped to a finite set of numbers, without explicitly defining the mapping. An example may be the uniform symmetric quantization, where a symmetric input interval may be partitioned into bins of equal width and each real number may be mapped the to the value of the closest bin central value.

A quantization scheme parametrization may be defined to be a list of quantities, for example parameters, that are sufficient to describe any possible mapping covered by the given quantization scheme.

An exemplary parametrization for the uniform symmetric quantization scheme may be to choose the bin width and the interval of representable numbers as parameters.

A quantization parameter may be defined to be one of the quantities, for example parameters, of a quantization scheme parametrization.

A quantization parameter value may be defined to be the value of a quantization parameter.

A quantization parameter value tuple may be defined to be a tuple of quantization parameter values that unambiguously describes each quantization parameter value of a quantization scheme parametrization.

According to various embodiments, the quantization scheme parameters may be decoupled in a sense that the gradient of the quantization function with respect to the quantization parameters has always only one strong component. The specific component which dominates the gradient may change depending on the input value which is to be quantized, but it may be important that all other components are negligible. The component which dominates may be referred to as the only one strong component.

According to various embodiments, the advantage of decoupling quantization parameters may lie in the possibility of factoring the sampling of quantization parameter value tuples. Instead of having to assume a KPI function with the most general dependence on the quantization parameters $p_1, p_2, p_3, ...$ namely $KPI = f(p_1, p_2, p_3, ...)$, a KPI function $KPI \approx h_{meta}(f_1(p_1), f_2(p_2), f_3(p_3), ...)$ may be used where for sake of simplicity it may be assumed that $h_{meta}(x, y, z, ...) \approx \max(x, y, z, ...)$. Thus, instead of having to sample a potentially high-dimensional parameter space wherein the number of samples increases exponentially with the number of parameters, it may be sufficient to sample from several one-dimensional spaces, where the number of samples increases linearly with the number of parameters.

Exemplary quantization schemes for deployment on embedded AI (artificial intelligence) accelerator hardware may be the symmetric uniform quantization $Q_{sym}$ and the asymmetric uniform quantization $Q_{asym}$. An example of a decoupled parametrization via the quantization function may be:

$$Q_{sym}[d, q_{max}](x) = \begin{cases} -q_{max}, & x < -q_{max} \\ q_{max}, & x > q_{max} \\ d \left\lfloor \dfrac{x}{d} + \dfrac{1}{2} \right\rfloor, & \text{else} \end{cases},$$

where the parameter d corresponds to the discretization step size and parameter $q_{max}$ corresponds to the clipping boundary.

An asymmetric uniform quantization $Q_{asym}$ may be defined with a similarly decoupled parametrization:

$$Q_{asym}[d, q_{min}, q_{max}](x) = \begin{cases} q_{min}, & x < q_{min} \\ q_{max}, & x > q_{max} \\ d \left\lfloor \dfrac{x}{d} + \dfrac{1}{2} \right\rfloor, & \text{else} \end{cases}$$

Here, the parameters may be the discretization step size $d$, the upper clipping boundary $q_{max}$, and the lower clipping boundary $q_{min}$. It will be understood that the symmetric quantization scheme $Q_{sym}$ is a special case of the asymmetric quantization scheme $Q_{asym}$. A special case of the asymmetric quantization may be a quantization where $q_{min}=0$.

According to various embodiments, a fractional required bit width for a given quantization function may be determined to be the logarithm to base 2 of the cardinality of the image of the quantization function (i.e., log2 of the number of possible output states). The fractional required bit width may be an integer number if the number of output states is a power of 2; otherwise, the fractional required bit width may be rounded up to the next integer. More generally, the fractional required bit width may be what one would obtain when calculating the Shannon entropy while assuming equally probable output states.

For the above-mentioned symmetric and asymmetric quantization functions, the cardinalities of the images may be approximately $\dfrac{2q_{max}}{d}$ and $\dfrac{q_{max} - q_{min}}{d}$, respectively. Hence, respective approximate estimates of the required fractional bit widths are:

$$b_{sym} = \log_2(2q_{max}) - \log_2(d)$$

$$b_{asym} = \log_2(q_{max} - q_{min}) - \log_2(d).$$

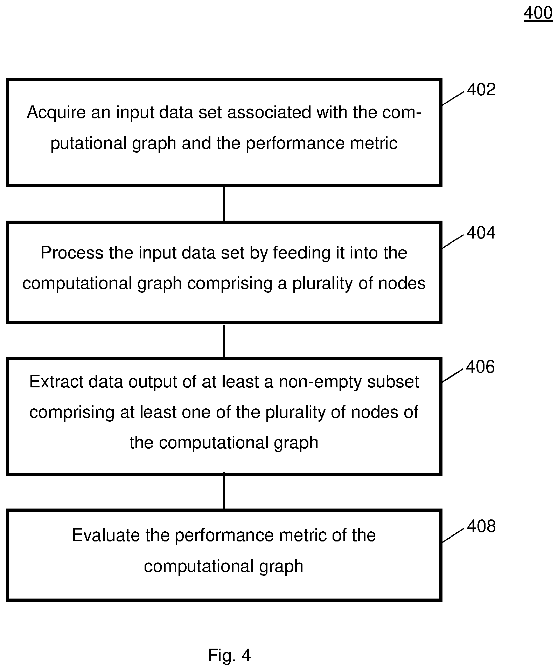

Fig. 4 shows a flow diagram 400 illustrating a method for evaluating a performance metric of a computational graph. At 402, an input data set associated with the computational graph including a plurality of nodes, and a quantization scheme defined by at least one quantization parameter. At 404, the input data set may be processed by feeding it into the computational graph. At 406, data output of at least a non-empty subset of the plurality of nodes of the computational graph may be extracted. At 408, the performance metric of the computational graph may be evaluated by performing for each of the nodes in the subset and for each of the at least one quantization parameter the steps of: varying a value of the respective quantization parameter; quantizing the respective node based on the value of the respective quantization parameter; and evaluating the computational graph based on the quantized respective node.

According to various embodiments, evaluating the performance metric may further include dequantizing the quantized respective node.

According to various embodiments, the performance metric may be based on

a) a user-provided reference; or evaluation of the computational graph using the input data set ; and
b) evaluation of the computational graph based on the quantization of the respective node.

According to various embodiments, the performance metric may include: a part of the evaluation of the computational graph based on the quantization of the respective node to the evaluation of the computational graph using the input data set; and the rest of evaluation of the computational graph based on the quantization of the respective node to the user-provided reference.

According to various embodiments, at least one quantization parameter may be user defined. According to various embodiments, the subset may be user defined. According to various embodiments, the performance metric may be user defined.

According to various embodiments, the performance metric may include or may be an Euclidean metric or a Manhattan metric between a number of detections in an output of the computational graph to which the quantization is applied and an output of the computational graph to which the quantization is not applied.

According to various embodiments, the quantization may include a symmetrical quantization scheme or an asymmetrical quantization scheme.

According to various embodiments, the quantization may indicate at least one clipping limit and a quantization step size.

According to various embodiments, the method may further include: for each node of the subset, determining quantization parameter value thresholds that separates quantization parameters which result in acceptable performance metric from those quantization parameters which result in not acceptable performance metric; and/or for each node of the subset, determining a set of quantization parameter values that result in close-to-optimum or optimum performance metric values for a given quantization bit width.

According to various embodiments, the set of quantization parameter values may include or may be at least one clipping limit and a quantization step size.

According to various embodiments, the method may further include determining for each node of the subset a number of quantization bits.

According to various embodiments, the method may further include quantizing the computational graph based on the performance metric.

According to various embodiments, the method may further include deploying the quantized computational graph on a resource-constrained embedded system.

According to various embodiments, the embedded system may be or may be included in a mobile computing device, a mobile phone, a tablet computing device, or a vehicle.

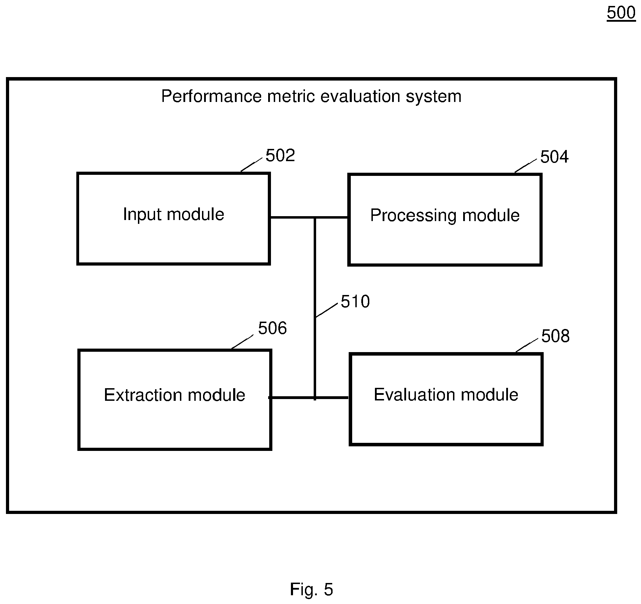

Fig. 5 shows a performance metric evaluation system 500 according to various embodiments. The performance metric evaluation system 500 may include an input module 502, a processing module 504, an extraction module 506, and an evaluation module 508.

The input module 502 may be configured to acquire an input data set associated with the computational graph including a plurality of nodes, and a quantization scheme defined by at least one quantization parameter.

The processing module 504 may be configured to process the input data set by feeding it into the computational graph.

The extraction module 506 may be configured to extract data output of at least a non-empty subset of the plurality of nodes of the computational graph.

The evaluation module 508 may be configured to evaluate the performance metric of the computational graph by performing for each of the nodes in the subset and for each of the at least one quantization parameter the steps of: varying a value of the respective quantization parameter; quantizing the respective node based on the value of the respective quantization parameter; and evaluating the computational graph based on the quantized respective node..

The input module 502, the processing module 504, the extraction module 506, and the evaluation module 508 may be coupled with each other, e.g. via an electrical connection 510, such as e.g. a cable or a computer bus or via any other suitable electrical connection to exchange electrical signals.

A " module" may be understood as any kind of a logic implementing entity, which may be special purpose circuitry or a processor executing a program stored in a memory, firmware, or any combination thereof.

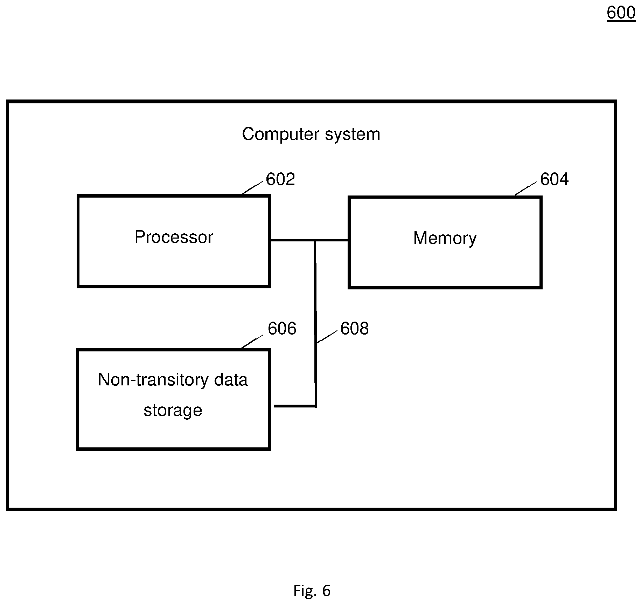

Fig. 6 shows a computer system 600 with a plurality of computer hardware components configured to carry out steps of a computer implemented method for path planning according to various embodiments. The computer system 600 may include a processor 602, a memory 604, and a non-transitory data storage 606.

The processor 602 may carry out instructions provided in the memory 604. The non-transitory data storage 606 may store a computer program, including the instructions that may be transferred to the memory 604 and then executed by the processor 602.

The processor 602, the memory 604, and the non-transitory data storage 606 may be coupled with each other, e.g. via an electrical connection 608, such as e.g. a cable or a computer bus or via any other suitable electrical connection to exchange electrical signals.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the performance metric evaluation system 500 and/or for the computer system 600.

Reference numeral list

| | |
|---|---|
| 100 | illustration of the quantizability analysis system according to various embodiments |
| I1-I7 | inputs |
| O1-O3 | outputs |
| U1-U5, UI1-UI2,UO1 | user process |
| 200 | an Illustration of the internals of the quantizability analysis system according to various embodiments |
| A1-A3 | internal blocks |
| T1, T2 | internal intermediate results |
| 300 | illustration of the frame-averaged KPI |
| 302 | horizontal axis |
| 304 | vertical axis |
| 306 | crosses indicating KPI values for given clipping bounds |
| 308 | dotted line indicating fit of crosses 306 |
| 310 | circles indicating KPI values for given quantization step sizes |
| 312 | line indicating fit of circles 310 |
| 314 | dashed line indicating threshold |
| 350 | illustration of estimated KPI |
| 352 | horizontal axis |
| 354 | vertical axis |
| 356 | curve of the estimated KPI vs. bit width dependency |
| 358 | dashed line indicating threshold |
| 400 | flow diagram illustrating a method for evaluating a performance metric of a computational graph |
| 402 | step of acquiring an input data set |
| 404 | step of processing the input data set by feeding it into the computational graph |
| 406 | step of extracting data output of at least a non-empty subset of the plurality of nodes of the computational graph |
| 408 | step of evaluating the performance metric of the computational graph |
| 500 | performance metric evaluation system |
| 502 | input module |
| 504 | processing module |
| 506 | extraction module |
| 508 | evaluation module |
| 600 | computer system |
| 602 | processor |
| 604 | memory |
| 606 | non-transitory data storage |
| 608 | connection |

**Claims**

1. Computer implemented method for evaluating a performance metric of a computational graph, the method comprising:

   - acquiring (402) an input data set associated with the computational graph comprising a plurality of nodes, and a quantization scheme defined by at least one quantization parameter;
   - processing (404) the input data set by feeding it into the computational graph;
   - extracting (406) data output of at least a non-empty subset of the plurality of nodes of the computational graph;
   - evaluating (408) the performance metric of the computational graph by performing for each of the nodes in the subset and for each of the at least one quantization parameter the steps of:

      varying a value of the respective quantization parameter;
      quantizing the respective node based on the value of the respective quantization parameter; and
      evaluating the computational graph based on the quantized respective node.

2. The method of claim 1,
   wherein evaluating (408) the performance metric further comprises dequantizing the quantized respective node.

3. The method of at least one of claims 1 or 2,
   wherein performance metric is based on

   a) a user-provided reference; or evaluation of the computational graph using the input data set ; and
   b) evaluation of the computational graph based on the quantization of the respective node.

4. The method of at least one of claims 1 to 3,
   wherein the performance metric compares:

   a part of the evaluation of the computational graph based on the quantization of the respective node to the evaluation of the computational graph using the input data set; and
   the rest of evaluation of the computational graph based on the quantization of the respective node to the user-provided reference.

5. The method of at least one of claims 1 to 4,

   wherein the at least one quantization parameter is user defined; and/ or wherein the subset is user defined; and/ or wherein the performance metric is user defined; and/or
   wherein the performance metric comprises an Euclidean metric or a Manhattan metric between a number of detections in an output of the computational graph to which the quantization is applied and an output of the computational graph to which the quantization is not applied.

6. The method of at least one of claims 1 to 5,

   wherein the quantization comprises a symmetrical quantization scheme or an asymmetrical quantization scheme; and/ or
   wherein the quantization indicates at least one clipping limit and a quantization step size.

7. The method of at least one of claims 1 to 6, further comprising:

   for each node of the subset, determining quantization parameter value thresholds that separates quantization parameters which result in acceptable performance metric from those quantization parameters which result in not acceptable performance metric; and/or
   for each node of the subset, determining a set of quantization parameter values that result in close-to-optimum or optimum performance metric values for a given quantization bit width.

8. The method of claim 7,
   wherein the set of quantization parameter values comprises at least one clipping limit and a quantization step size.

9. The method of at least one of claims 1 to 8, further comprising: determining for each node of the subset a number of quantization bits.

10. The method of at least one of claims 1 to 9,
the method further comprising:
quantizing the computational graph based on the performance metric.

11. The method of claim 10, further comprising:
deploying the quantized computational graph on a resource-constrained embedded system.

12. The computer implemented method of claim 11,
wherein the embedded system is a mobile computing device, a mobile phone, a tablet computing device, or a vehicle.

13. A method for evaluating deployability of a computational graph, the method comprising evaluating a performance metric of the computational graph based on the method of at least one of claims 1 to 12, wherein the deployability is evaluated based on the performance metric.

14. Computer system, the computer system comprising a plurality of computer hardware components configured to carry out steps of the computer implemented method of at least one of claims 1 to 12.

15. Non-transitory computer readable medium comprising instructions for carrying out the computer implemented method of at least one of claims 1 to 12.

Fig. 1

EP 4 258 170 A1

200

Fig. 2

Fig. 3A

Fig. 3B

400

```
┌──────────────────────────────────────────────┐   ╱402
│   Acquire an input data set associated with    │
│   the computational graph and the performance  │
│   metric                                       │
└──────────────────────────────────────────────┘
                        │
┌──────────────────────────────────────────────┐   ╱404
│   Process the input data set by feeding it     │
│   into the computational graph comprising a    │
│   plurality of nodes                           │
└──────────────────────────────────────────────┘
                        │
┌──────────────────────────────────────────────┐   ╱406
│   Extract data output of at least a non-empty  │
│   subset comprising at least one of the        │
│   plurality of nodes of the computational      │
│   graph                                        │
└──────────────────────────────────────────────┘
                        │
┌──────────────────────────────────────────────┐   ╱408
│   Evaluate the performance metric of the       │
│   computational graph                          │
└──────────────────────────────────────────────┘
```

Fig. 4

500

Performance metric evaluation system

502

Input module

504

Processing module

510

506

Extraction module

508

Evaluation module

Fig. 5

600

Computer system

602

Processor

604

Memory

606

Non-transitory data
storage

608

Fig. 6

Europäisches
Patentamt

European
Patent Office

Office européen
des brevets

**EUROPEAN SEARCH REPORT**

Application Number

EP 22 16 7203

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/174172 A1 (QADEER WAJAHAT [US] ET AL) 10 June 2021 (2021-06-10) <br> * figure 1 and 2 * <br> * page 1 - page 8 * <br> ───── | 1-15 | INV. <br> G06N3/04 |

TECHNICAL FIELDS
SEARCHED       (IPC)

G06N

The present search report has been drawn up for all claims

| Place of search | Date of completion of the search | Examiner |
|---|---|---|
| The Hague | 22 September 2022 | Theissing, Simon |

EPO FORM 1503 03.82 (P04C01)

## ANNEX TO THE EUROPEAN SEARCH REPORT
## ON EUROPEAN PATENT APPLICATION NO.

**EP 22 16 7203**

This annex lists the patent family members relating to the patent documents cited in  the above-mentioned European search report.
The members are as contained in the European Patent Office EDP file on
The European Patent Office is in no way liable for these particulars which are merely given for the purpose of information.

**22-09-2022**

| Patent document cited in search report | Publication date | Patent family member(s) | Publication date |
|---|---|---|---|
| US 2021174172    A1 | 10-06-2021 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEFAN UHLICH ; LUKAS MAUCH ; FABIEN CARDINAUX ; KAZUKI YOSHIYAMA ; JAVIER ALONSO GARCIA ; STEPHEN TIEDEMANN ; THOMAS KEMP ; AKIRA NAKAMURA.** Mixed Precision DNNs: All you need is a good parametrization. *arXiv:1905.11452,* 2019
- **AHMED T. ELTHAKEB ; PRANNOY PILLIGUNDLA ; AMIR YAZDANBAKHSH ; SEAN KINZER ; HADI ESMAEILZADEH.** Releq: A reinforcement learning approach for deep quantization of neural networks. *arXiv:1811.01704,* 2018
- **STEVEN K. ESSER ; JEFFREY L. MCKINSTRY ; DEEPIKA BABLANI ; RATHINAKUMAR APPUSWAMY ; DHARMENDRA S. MODHA.** Learned step size quantization. *arXiv:1902.08153,* 2019
- **KUAN WANG ; ZHIJIAN LIU ; YUJUN LIN ; JI LIN ; SONG HAN.** HAQ: hardware-aware automated quantization. *arXiv:1811.08886,* 2018
- **SAMBHAV R. JAIN ; ALBERT GURAL ; MICHAEL WU ; CHRIS DICK.** Trained uniform quantization for accurate and efficient neural network inference on fixed-point hardware. *arXiv:1903.08066,* 2019
- **RON BANNER ; YURY NAHSHAN ; ELAN HOFFER ; DANIEL SOUDRY.** ACIQ: Analytical Clipping for Integer Quantization of neural networks. *ICRL,* 2019